# EUROPÄISCHE PATENTSCHRIFT

(11) **EP 4 194 737 B1**
(45) Veröffentlichungstag und Bekanntmachung des Hinweises auf die Patenterteilung: **24.07.2024**
(21) Anmeldenummer: 22212510.6
(22) Anmeldetag: 09.12.2022
(51) Int. Cl.: F17C 13/04

(54) **DRUCKBEHÄLTER UND VERFAHREN ZU DESSEN BEFÜLLEN**
PRESSURE VESSEL AND METHOD FOR FILLING THE SAME
RÉCIPIENT SOUS PRESSION ET PROCÉDÉ POUR SON REMPLISSAGE

(30) Priorität: 10.12.2021 DE 102021132643
(43) Veröffentlichungstag der Anmeldung: 14.06.2023
(60) Teilanmeldung: 24183047.0
(73) Patentinhaber: ASS-NBG GmbH, 99897 Tambach-Dietharz (DE)
(72) Erfinder: JAHN, Andreas, 99897 Tambach-Dietharz (DE); ORTLEPP, Tobias, 98593 Floh-Seligenthal (DE)
(74) Vertreter: Liedtke & Partner Patentanwälte

(56) Entgegenhaltungen:
- EP-A1- 2 236 905
- WO-A1-2021/099542
- DE-U1- 202004 004 659
- US-A- 4 978 832

## Beschreibung

Die Erfindung betrifft einen Druckbehälter nach den Merkmalen des Oberbegriffs des Anspruchs 1 und ein Verfahren zu dessen Befüllen.

Aus dem Stand der Technik sind, wie in der WO 2021/099542 A1 beschrieben, ein Druckbehälter und ein Verfahren zur Herstellung eines Druckbehälters bekannt. Der Druckbehälter umfasst einen Behälterkörper mit einem an einem unteren Ende angeordneten und einstückig mit dem Behälterkörper ausgebildeten Behälterboden, ein an einem oberen Ende des Behälterkörpers angeordnetes und einstückig mit dem Behälterkörper ausgebildetes Endstück mit einer Öffnung, eine an einer die Öffnung des Endstücks umgebenden Wandung außenseitig angeordnete Anschlussgeometrie, wobei die Wandung mit der Anschlussgeometrie einen Anschluss bildet, welcher eingerichtet ist, mit einem korrespondierenden weiteren Anschluss mediendicht gekoppelt zu werden oder zu sein, eine an der die Öffnung des Endstücks umgebenden Wandung innenseitig ausgeformte Befestigungsstruktur für ein Ventil und eine in einer Überdrucköffnung des Endstücks oder einer Überdrucköffnung des Behälterkörpers angeordnete Überdrucksicherung.

In der DE 20 2021 105 982 U1 wird ein Druckbehälter beschrieben, welcher einen Behälterkörper aufweist, wobei an einem oberen Ende des Behälterkörpers ein Endbereich einstückig mit dem Behälterkörper ausgebildet ist, der eine Öffnung aufweist. Der Druckbehälter weist des Weiteren eine an einer die Öffnung des Endbereichs umgebenden Wandung innenseitig ausgeformte Befestigungsstruktur für ein Ventil auf. In der die Öffnung des Endbereichs umgebenden Wandung sind zumindest zwei Ausströmöffnungen ausgebildet, die einander gegenüberliegend angeordnet sind.

Aus der EP 2 236 905 A1, DE 20 2004 004 659 U1 und US 4 978 832 A sind weitere Druckbehälter bekannt.

Der Erfindung liegt die Aufgabe zu Grunde, einen neuartigen Druckbehälter und ein Verfahren zu dessen Befüllen anzugeben.

Die Aufgabe wird erfindungsgemäß gelöst durch einen Druckbehälter mit den Merkmalen des Anspruchs 1 und ein Verfahren zu dessen Befüllen mit den Merkmalen des Anspruchs 14.

Vorteilhafte Ausgestaltungen der Erfindung sind Gegenstand der Unteransprüche.

Ein Druckbehälter weist einen Behälterkörper auf. An einem oberen Ende des Behälterkörpers ist ein Endbereich einstückig mit dem Behälterkörper ausgebildet. Dieser einstückig mit dem Behälterkörper ausgebildete Endbereich kann auch als Endstück bezeichnet werden. Der Endbereich weist eine Öffnung auf. Des Weiteren weist der Druckbehälter ein Ventil auf, welches im Endbereich angeordnet ist.

Erfindungsgemäß sind in der die Öffnung des Endbereichs umgebenden Wandung unter der Öffnung, insbesondere sich einander gegenüberliegend, zumindest zwei Ausströmöffnungen ausgebildet. In einer Ausströmstellung des Ventils sind die Ausströmöffnungen über das Ventil mit einem Behälterinnenraum des Behälterkörpers fluidisch verbunden und die Öffnung des Endbereichs ist mediendicht verschlossen. In einer Befüllstellung des Ventils ist die Öffnung des Endbereichs über das Ventil mit dem Behälterinnenraum des Behälterkörpers fluidisch verbunden.

In einem erfindungsgemäßen Verfahren zum Befüllen des Druckbehälters wird der Druckbehälter in einer Befüllvorrichtung angeordnet. Dabei kann vorgesehen sein, dass die Ausströmöffnungen von außen mediendicht verschlossen werden. Danach wird das Ventil in die Befüllstellung bewegt und der Druckbehälter wird über die Öffnung des Endbereichs befüllt, insbesondere über eine Befüllöffnung in einem Deckel und eine Durchlassöffnung in einem Ventilkörper des Ventils. Dabei wird durch das mediendichte Verschließen der Ausströmöffnungen ein Entweichen des Mediums, mit welchem der Druckbehälter befüllt wird, über die Ausströmöffnungen verhindert. Alternativ kann beispielsweise vorgesehen sein, dass der Druckbehälter über die Öffnung des Endbereichs und zusätzlich über die Ausströmöffnungen befüllt wird. Hierbei werden somit die Ausströmöffnungen nicht mediendicht verschlossen, sondern mit der Befüllvorrichtung zum Befüllen gekoppelt. Alternativ kann beispielsweise vorgesehen sein, dass der Druckbehälter nur über die Ausströmöffnungen befüllt wird. Hierbei werden somit die Ausströmöffnungen nicht mediendicht verschlossen, sondern mit der Befüllvorrichtung zum Befüllen gekoppelt. Des Weiteren wird hierfür das Ventil in die Ausströmstellung bewegt, in welcher die Ausströmöffnungen über das Ventil mit dem Behälterinnenraum des Behälterkörpers fluidisch verbunden sind, so dass das Befüllen des Druckbehälters über die Ausströmöffnungen ermöglicht wird, und die Öffnung des Endbereichs mediendicht verschlossen ist, so dass das Entweichen des Mediums, mit welchem der Druckbehälter befüllt wird, über die Öffnung des Endbereichs verhindert wird.

Der Druckbehälter, beispielsweise Druckgasbehälter, ermöglicht eine Integration des Ventils bzw. einer Ventilfunktion in den Endbereich und insbesondere eine unmittelbare mediendichte Kopplung des Druckbehälters mit einem weiteren Anschluss, beispielsweise einem Anschluss einer Anwendung oder einem Anschluss der Befüllvorrichtung.

Im Gegensatz zum Stand der Technik wird durch die erfindungsgemäße Lösung ein seitliches Ausströmen eines sich im Behälterkörper befindenden Mediums, beispielsweise Gases, zum Beispiel Kohlenstoffdioxid, ermöglicht. Das Medium strömt dabei durch das Ventil, insbesondere axial durch das Ventil und axial aus dem Ventil, und anschließend durch die beiden Ausströmöffnungen in der Wandung hindurch aus und in die Anwendung ein. Die erfindungsgemäße Lösung ist daher insbesondere für Anwendungen geeignet, in welchen ein solches seitliches Ausströmen erforderlich ist.

Im Gegensatz zu anderen Lösungen, in denen das Ventil aus dem Behälterkörper herausragt, um dadurch das seitliche Ausströmen aus dem Ventil zu ermöglichen, wird durch die erfindungsgemäße Lösung eine kleinere Bauhöhe erreicht, da das Ventil nahezu vollständig im Behälterkörper angeordnet werden kann bzw. ist. Beispielsweise ragt nur ein kragenförmiger oberer Deckelabschnitt eines Deckels aus dem Behälterkörper heraus, welcher an einer Stirnseite der Wandung des Endbereichs dichtend anliegt. Des Weiteren werden bei der erfindungsgemäßen Lösung weniger Dichtungen benötigt als im Stand der Technik.

Durch die erfindungsgemäße Lösung wird zudem das Befüllen des Druckbehälters über die Öffnung im Endbereich ermöglicht, wodurch beispielsweise eine schnellere Befüllung als über die Ausströmöffnungen möglich ist. Durch die erfindungsgemäße Lösung wird verhindert, dass während einer Betätigung des Ventils in der Anwendung das Medium aus dem Druckbehälter über die Öffnung im Endbereich entweicht. Hierzu ist insbesondere vorgesehen, dass das Ventil des Druckbehälters, wenn er in der Anwendung angeordnet ist, mittels der Anwendung aus einer geschlossenen Ventilstellung nur in die Ausströmstellung bewegt werden kann, in welcher die Öffnung des Endbereichs weiterhin mediendicht verschlossen ist, so dass ein Ausströmen des Mediums über die Öffnung des Endbereichs verhindert wird. Das Medium kann somit in der Ausströmstellung des Ventils nur über die Ausströmöffnungen ausströmen. Zum Befüllen des Druckbehälters wird er in die Befüllvorrichtung eingesetzt, mittels welcher das Ventil in die Befüllstellung bewegt werden kann. Dadurch wird das Befüllen des Druckbehälters über die in der Befüllstellung freigegebene Öffnung im Endbereich ermöglicht.

Das Ventil ist beispielsweise in den Endbereich eingeschraubt. Es ist beispielsweise als ein Rückschlagventil ausgebildet.

In einer möglichen Ausführungsform weist das Ventil einen Ventilkörper mit einer Durchlassöffnung auf, in der ein Ventilstößel angeordnet ist, welcher in der geschlossenen Ventilstellung des Ventils die Durchlassöffnung mediendicht verschließt und in der Ausströmstellung sowie in der Befüllstellung des Ventils die Durchlassöffnung freigibt. Dadurch wird in der Ausströmstellung das Ausströmen des Mediums über das Ventil, insbesondere dessen Durchlassöffnung, und die fluidisch damit verbundenen Ausströmöffnungen ermöglicht, und in der Befüllstellung wird das Befüllen des Druckbehälters mit dem Medium über die dann mittels des Ventils freigegebene Öffnung des Endstücks und die Durchlassöffnung ermöglicht.

In einer möglichen Ausführungsform weist das Ventil ein mit dem Ventilkörper verbundenes oder an dem Ventilkörper ausgebildetes Abstützelement und ein innerhalb des Ventilkörpers angeordnetes Federelement auf, welches sich mit einem ersten Ende an dem Abstützelement und mit einem gegenüberliegenden zweiten Ende mittelbar, beispielsweise über ein Gehäuse, oder unmittelbar, insbesondere direkt, an dem Ventilstößel abstützt. Das Federelement wird insbesondere bei einer Bewegung des Ventilstößels von der geschlossenen Ventilstellung in die Ausströmstellung gespannt, insbesondere komprimiert, und bei einer Bewegung des Ventilstößels von der Ausströmstellung in die Befüllstellung weiter gespannt, insbesondere weiter komprimiert.

In einer möglichen Ausführungsform ist ein Deckel vorgesehen, welcher oberhalb des Ventilkörpers und oberhalb der Ausströmöffnungen im Endbereich angeordnet ist. Der Deckel weist beispielsweise eine Befüllöffnung auf, in der ein Betätigungsstößel angeordnet ist. Eine Unterseite des Betätigungsstößels kann beispielsweise an einer Oberseite des Ventilstößels anliegen und/oder mit dieser verbunden sein. Der Betätigungsstößel verschließt in der Ausströmstellung des Ventils die Befüllöffnung mediendicht und gibt in der Befüllstellung des Ventils die Befüllöffnung frei. Dadurch werden das Betätigen des Ventilstößels und das mediendichte Verschließen der Öffnung des Endbereichs in der Ausströmstellung des Ventils ermöglicht. Der Ventilstößel ist somit mittels des Betätigungsstößels betätigbar, insbesondere aus der geschlossenen Ventilstellung in die Ausströmstellung und weiter in die Befüllstellung bewegbar, insbesondere durch ein entsprechendes Herunterdrücken des Betätigungsstößels und dadurch auch des Ventilstößels.

Zur Betätigung in einer Anwendung wird der Betätigungsstößel und dadurch der Ventilstößel mittels der Anwendung, beispielsweise mittels einer Betätigungseinheit der Anwendung, nur soweit bewegt, insbesondere nach unten bewegt, bis die Ausströmstellung erreicht ist. Dadurch strömt das Medium aus dem Behälterinnenraum über die beiden Ausströmöffnungen aus dem Druckbehälter aus und in die Anwendung ein. Ein Ausströmen des Mediums über die Öffnung im Endbereich wird durch den Deckel und den Betätigungsstößel, der in der Ausströmstellung die Befüllöffnung im Deckel mediendicht verschließt, verhindert.

Zur Befüllung des Druckbehälters wird bei in der Befüllvorrichtung angeordnetem Druckbehälter der Betätigungsstößel und dadurch der Ventilstößel, insbesondere mittels einer entsprechenden Einheit der Befüllvorrichtung, über die Ausströmstellung hinweg weiter, insbesondere weiter nach unten, in die Befüllstellung bewegt, wodurch nun die Durchlassöffnung und auch die Befüllöffnung freigegeben sind. Insbesondere werden zum Befüllen die Ausströmöffungen von außen mediendicht verschlossen. Das Befüllen erfolgt dadurch über die Befüllöffnung und die Durchlassöffnung. Hierrüber strömt das Medium, mit welchem der Druckbehälter durch die Befüllvorrichtung befüllt wird, in den Behälterinnenraum ein.

Ventilstößel und Betätigungsstößel sind beispielsweise als separate Bauteile ausgebildet oder zusammen als ein einteiliges und/oder einstückiges Bauteil ausgebildet.

Der Deckel und der Ventilkörper sind beispielsweise als separate Bauteile ausgebildet. Hierbei ist insbesondere vorgesehen, dass der Deckel zum Ventilkörper beabstandet angeordnet ist, um in der Ausströmstellung des Ventils das Strömen des Mediums über die Durchlassöffnung zu den Ausströmöffnungen zu ermöglichen.

In einer weiteren möglichen Ausführungsform sind der Deckel und der Ventilkörper beispielsweise zusammen als ein einteiliges und/oder einstückiges Bauteil ausgebildet. Der Ventilkörper weist dann beispielsweise eine, insbesondere genau eine, Verbindungsöffnung auf, welche radial von einer Innenseite in Richtung einer Außenseite des Ventilkörpers ausgebildet ist. Dadurch wird eine einfache Herstellung des Ventilkörpers ermöglicht. Zudem ist der Ventilkörper besonders stabil, da er nur eine einzige Verbindungsöffnung aufweist und somit eine durch mehrere Verbindungsöffnungen verursachte zusätzliche Schwächung vermieden wird. Der Ventilkörper kann daher beispielsweise mit einem geringeren Materialaufwand und/oder aus einem anderen, insbesondere kostengünstigeren, Material ausgebildet werden, beispielsweise aus Aluminium oder Messing.

In anderen Ausführungsformen kann das Ventil mehrere solche Verbindungsöffnungen aufweisen, welche jeweils radial von der Innenseite in Richtung der Außenseite des Ventilkörpers ausgebildet sind.

Die Verbindungsöffnung oder die jeweilige Verbindungsöffnung im Ventilkörper ist insbesondere auf Höhe der Ausströmöffnungen im Endbereich positioniert. Dadurch werden kurze Strömungswege zwischen der Verbindungsöffnung im Ventil und den beiden Ausströmöffnungen sichergestellt.

Alternativ kann die Verbindungsöffnung oder die jeweilige Verbindungsöffnung auch in ihrer Höhe versetzt zur Höhe der Ausströmöffnungen im Endbereich positioniert sein.

Beispielsweise mündet die Verbindungsöffnung in eine an der Außenseite des Ventilkörpers in diesem umlaufend ausgebildete Verteilernut und/oder ein innerer Öffnungsrand der jeweiligen Ausströmöffnung ist an einem Nutboden einer an der Innenseite der Wandung des Endbereichs ausgebildeten umlaufenden Verteilernut angeordnet. Dadurch wird eine gleichmäßige Verteilung des aus der einen Verbindungsöffnung im Ventilkörper ausströmenden Mediums auf die beiden Ausströmöffnungen in der Wandung des Endbereichs und somit ein gleichmäßiges Ausströmen des Mediums aus beiden Ausströmöffnungen sichergestellt.

Ist die Verbindungsöffnung oder die jeweilige Verbindungsöffnung in ihrer Höhe versetzt zur Höhe der Ausströmöffnungen im Endbereich positioniert, ist beispielsweise die Verteilernut entsprechend breit ausgebildet oder es ist ein Verbindungskanal zwischen der Verbindungsöffnung oder der jeweiligen Verbindungsöffnung und der Verteilernut vorgesehen oder es ist eine andere fluidische Verbindung zwischen der Verbindungsöffnung oder der jeweiligen Verbindungsöffnung und der Verteilernut vorgesehen.

In einer möglichen Ausführungsform ist eine an einer die Öffnung des Endbereichs umgebenden Wandung innenseitig ausgeformte Befestigungsstruktur für das Ventil vorgesehen. Sie weist insbesondere ein an der Innenseite der Wandung angeordnetes Innengewinde auf. In einer möglichen Ausführungsform weist das Ventil, d. h. insbesondere der Ventilkörper und/oder der Deckel, ein zu dem Innengewinde der Befestigungsstruktur korrespondierendes Außengewinde auf. Im in das Innengewinde eingeschraubten Zustand, insbesondere vollständig, d. h. bis zu einer vorgegebenen Endposition, eingeschraubten Zustand, ist das Ventil im Bereich der Öffnung des Endbereichs angeordnet, ragt ausgehend von der Öffnung in den Endbereich hinein und liegt, insbesondere mit dem Deckel, an dem Endbereich mediendicht an.

Die Ausbildung des Ventils mit den Ventilkomponenten, welche innerhalb oder am Ventil gehalten sind, ermöglicht eine besonders einfache Montage des Ventils als Ganzes oder in lediglich zwei Teilen, nämlich Ventilkörper mit seinen Komponenten und Deckel mit seinen Komponenten, im Endbereich. Da das Ventil im Gegensatz zu aus dem Stand der Technik bekannten Lösungen mit außen am Endbereich angeordnetem separatem Ventil keine Haltefunktion aufweist, kann das Ventil hinsichtlich seiner Materialstärke und Materialmenge signifikant schwächer dimensioniert werden.

Beispielsweise ist zwischen dem Ventilkörper und dem Endbereich und/oder zwischen dem Deckel und dem Endbereich jeweils mindestens eine Dichtung, zum Beispiel in Form eines O-Rings oder einer Wellendichtung, angeordnet. Dabei ist die Dichtung am Ventilkörper insbesondere unterhalb der Ausströmöffnungen und die Dichtung am Deckel oberhalb der Ausströmöffnungen angeordnet. Dadurch wird in der geschlossenen Ventilstellung des Ventils das Ausströmen des Mediums aus dem Behälterinnenraum und in der Ausströmstellung des Ventils ein das Ausströmen des Mediums aus der Öffnung des Endbereichs verhindert. Auch zwischen dem Ventilkörper und dem Ventilstößel und/oder zwischen dem Deckel und dem Betätigungsstößel ist in einer möglichen Ausgestaltung jeweils eine Dichtung, zum Beispiel jeweils in Form eines O-Rings oder einer Wellendichtung, angeordnet. Diese Dichtungen sind sehr zuverlässig und kostengünstig verfügbar.

In einer möglichen Ausführungsform weisen das Abstützelement und/oder der Ventilkörper eine Einströmöffnung auf. Dadurch kann das Medium aus dem Behälterinnenraum durch den Ventilkörper hindurch zur Durchlassöffnung und in der Ausströmstellung des Ventils durch diese hindurch ausströmen. Zudem kann dadurch während des Befüllens des Druckbehälters das Medium in der Befüllstellung und auch in der Ausströmstellung durch Durchlassöffnung, den Ventilkörper und die Einströmöffnung in den Behälterinnenraum einströmen.

Der Behälterkörper weist insbesondere einen an einem unteren Ende angeordneten und einstückig mit dem Behälterkörper ausgebildeten Behälterboden auf. Insbesondere durch die einstückige Ausbildung des gesamten Behälterkörpers inklusive Behälterboden und Endbereich wird mit geringem Aufwand, insbesondere mit geringem Materialaufwand, eine besonders große Druckstabilität erreicht, da Verbindungen, beispielsweise Schweißnähte, welche Schwachstellen darstellen, vermieden werden.

Der Behälterkörper weist insbesondere eine an einer die Öffnung des Endbereichs umgebenden Wandung außenseitig angeordnete Anschlussgeometrie auf, zum Beispiel ein Außengewinde, eine Rastanordnung oder ein Schnellverschluss, wobei die Wandung mit der Anschlussgeometrie einen Anschluss bildet, welcher eingerichtet ist, mit einem korrespondierenden weiteren Anschluss, insbesondere einem Anschluss einer Anwendung oder einem Anschluss der Befüllvorrichtung, mediendicht gekoppelt zu werden oder zu sein. Aufgrund der Ausbildung der Anschlussgeometrie, beispielsweise eines so genannten ACME-Gewindes, am Endbereich kann das Ventil als separates Bauteil entfallen. Hieraus ergibt sich gegenüber aus dem Stand der Technik bekannten Lösungen mit separatem Ventil, dass eine Anzahl von Einzelteilen verringert werden kann, weiterhin ein beispielsweise aus Messing gebildeter Grundkörper des Ventils entfallen oder zumindest hinsichtlich seiner Materialstärke und Materialmenge signifikant schwächer dimensioniert werden kann. Somit kann ein Material- und Kostenaufwand signifikant verringert werden. Beispielsweise kann eine Einsparung an Messing von bis 200 g pro Druckbehälter mit Ventil erzielt werden.

Des Weiteren kann aufgrund der Ausbildung der Anschlussgeometrie am Endbereich und somit am Druckbehälter eine zuverlässige und verbesserte Mediendichtheit erreicht werden, welche insbesondere aus einer Verringerung einer Anzahl von Fügestellen und deren Abdichtung gegenüber denen aus dem Stand der Technik bekannten Lösungen mit separatem Ventil resultiert. Ferner ist ein Montageaufwand verringert.

Auch kann eine im Stand der Technik zur Abdichtung des Ventils gegenüber dem Druckbehälter vorgesehene Dichtung, insbesondere ein so genannter O-Ring, entfallen, woraus ebenfalls eine Reduktion der Anzahl von Einzelteilen und eine Kostenreduktion resultieren.

Aufgrund der Integration des Ventils in den Druckbehälter und der Ausbildung des Außengewindes am Endbereich muss das Ventil nicht mehr aus Messing gebildet sein. Beispielsweise sind sowohl der Druckbehälter, d. h. der Behälterkörper mit Behälterboden und der Endbereich, als auch die Komponenten des Ventils aus Aluminium gebildet. Dies führt einerseits zum Vorteil, dass besonders geringe Kosten erzielt werden können und dass andererseits zumindest alle für die Mediendichtheit verantwortlichen Komponenten aus dem gleichen Material mit gleichem Wärmeausdehnungskoeffizient gebildet sind, und somit unterschiedliche Ausdehnungen und daraus folgende Undichtigkeiten bei Temperaturänderungen vermieden werden. Auch ist bei der Ausbildung der Komponenten des Ventils und des Druckbehälters ein einfaches und vollständiges Recycling möglich. Alternativ ist das Ventil beispielsweise aus Messing oder einem anderen Material ausgebildet.

In einer möglichen Ausführungsform weist Druckbehälter eine Überdrucksicherung auf. Beispielsweise ist diese Überdrucksicherung im Ventil angeordnet. Alternativ ist diese Überdrucksicherung beispielsweise im Behälterboden, insbesondere in einer im Behälterboden ausgebildeten Überdrucköffnung, angeordnet. Dies ermöglicht bei einer entsprechenden Ausbildung des Behälterbodens, beispielsweise mit einer entsprechenden Vertiefung, eine integrierte Anordnung der Überdrucksicherung, ohne dass diese über einen Außenrand des Druckbehälters übersteht. Somit ist ein Schutz vor mechanischer Beschädigung der Überdrucksicherung erhöht. Weiterhin kann ein erforderlicher Bauraum zur Aufnahme des Druckbehälters in einer Anwendung verringert werden und eine Montage des Druckbehälters in dem Bauraum ist vereinfacht.

Die Überdrucksicherung umfasst zum Beispiel eine Berstscheibe. Beispielsweise ist ein durch den Ventilstößel und den Betätigungsstößel hindurch verlaufender Überdruckkanal ausgebildet, welcher von der Berstscheibe mediendicht verschlossen ist. Beispielsweise ist die Berstscheibe hierzu an einem zum Behälterinnenraum weisenden Ende des Überdruckkanals am Ventilstößel angeordnet und beispielsweise vom Gehäuse am Ventilstößel gehalten. Alternativ ist die Berstscheibe beispielsweise mit einer Schraube, umfassend einen Entlüftungsbolzen, gesichert, beispielsweise im Ventil oder im Behälterboden. Eine solche Ausbildung der Überdrucksicherung, insbesondere mittels Berstscheibe, ist besonders einfach, kostengünstig und zuverlässig. Beispielsweise ist die Überdrucksicherung für einen Auslösedruck von 250 bar ausgebildet. Es sind jedoch auch beliebige andere Auslösedruckwerte möglich.

Beispielsweise ist die Berstscheibe fluidisch mit einem Inneren des Druckbehälters, d. h. mit dem Behälterinnenraum, gekoppelt. Sie wird beispielsweise randseitig von der Schraube gehalten, innerhalb welcher ein Entlüftungsbolzen ausgebildet oder angeordnet ist, oder vom Gehäuse und dem Ventilstößel mit darin ausgebildetem Überdruckkanal gehalten. Wird der Auslösedruck überschritten, wird die Berstscheibe mechanisch zerstört und gibt eine fluidische Verbindung zwischen dem Entlüftungsbolzen bzw. dem Überdruckkanal und dem Behälterinnenraum frei, so dass das sich im Behälterinnenraum befindende Medium, beispielsweise Gas, entweichen kann.

Insbesondere bei einer Anordnung der Überdrucksicherung im Behälterboden umfasst die Überdrucköffnung beispielsweise ein mit einem Außengewinde der Schraube korrespondierendes Innengewinde, in welches die Schraube eingeschraubt ist. Dies ermöglicht eine besonders einfache und sichere Befestigung der Überdrucksicherung. Beispielsweise wird das Innengewinde durch spanende Bearbeitung erzeugt. Das Innengewinde kann jedoch auch in einem Umformverfahren, beispielsweise einem Rollumformverfahren, während der Ausformung des Behälterbodens erzeugt werden. Es sind alternativ auch andere Verfahren zur Herstellung des Innengewindes möglich.

In einem Verfahren zur Herstellung eines zuvor beschriebenen Druckbehälters werden der Behälterkörper und der Endbereich beispielsweise gemeinsam aus einem Materialrohling in einem Rollumformverfahren hergestellt. Weiterhin werden die Befestigungsstruktur für das Ventil und insbesondere auch die Anschlussgeometrie beispielsweise mittels spanender Bearbeitung und/oder Umformung, insbesondere während des Rollumformverfahrens, und/oder Aufbringen von Material und/oder anderer geeigneter Verfahren im Bereich des Endbereichs erzeugt. Des Weiteren werden die beiden Ausströmöffnungen in der Wandung des Endbereichs ausgebildet. Anschließend wird das Ventil im Bereich der Öffnung am Endbereich befestigt, insbesondere eingeschraubt. Sind der Ventilkörper mit seinen Komponenten und der Deckel mit seinen Komponenten als separate Bauteile ausgebildet, wird hierzu insbesondere zunächst der Ventilkörper im Bereich der Öffnung am Endbereich befestigt, insbesondere eingeschraubt, und danach der Deckel im Bereich der Öffnung am Endbereich befestigt, insbesondere eingeschraubt. Der Druckbehälter ist mittels des Rollumformverfahrens besonders einfach und mit hoher Qualität herstellbar. Auch die Erzeugung der Befestigungsstruktur und die Befestigung des Ventils sind besonders einfach, zuverlässig und mit geringem Kostenaufwand realisierbar.

In einer möglichen Ausgestaltung des Verfahrens zur Herstellung des Druckbehälters wird die Überdrucköffnung im Behälterboden mittels spanender Bearbeitung und/oder Umformung, insbesondere während des Rollumformverfahrens, und/oder Aufbringen von Material und/oder anderer geeigneter Verfahren erzeugt und anschließend die Überdrucksicherung an der Überdrucköffnung befestigt. Die Erzeugung der Überdrucköffnung und die Befestigung der Überdrucksicherung sind besonders einfach, zuverlässig und mit geringem Kostenaufwand realisierbar.

Ausführungsbeispiele der Erfindung werden im Folgenden anhand von Zeichnungen näher erläutert. Darin zeigen:
- Figur 1: schematisch eine perspektivische Längsschnittdarstellung eines Druckbehälters mit einem Ventil in einer geschlossenen Ventilstellung,
- Figur 2: schematisch eine Längsschnittdarstellung des Druckbehälters mit dem Ventil in der geschlossenen Ventilstellung,
- Figur 3: schematisch eine perspektivische Längsschnittdarstellung des Druckbehälters mit dem Ventil in einer Ausströmstellung,
- Figur 4: schematisch eine Längsschnittdarstellung des Druckbehälters mit dem Ventil in der Ausströmstellung,
- Figur 5: schematisch eine perspektivische Längsschnittdarstellung des Druckbehälters mit dem Ventil in einer Befüllstellung und
- Figur 6: schematisch eine Längsschnittdarstellung des Druckbehälters mit dem Ventil in der Befüllstellung.

Einander entsprechende Teile sind in allen Figuren mit den gleichen Bezugszeichen versehen.

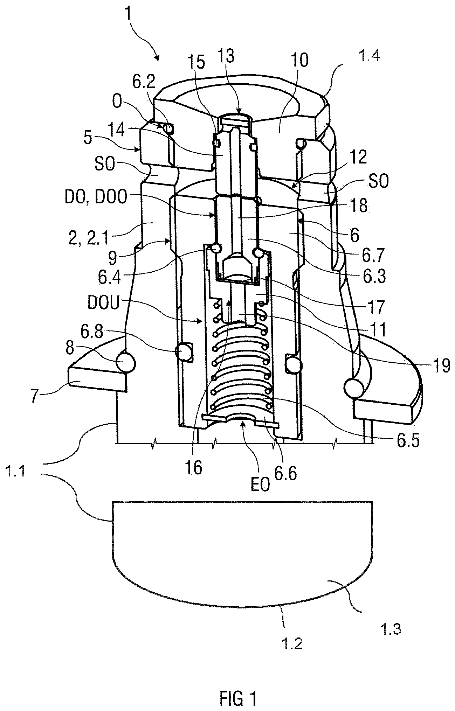

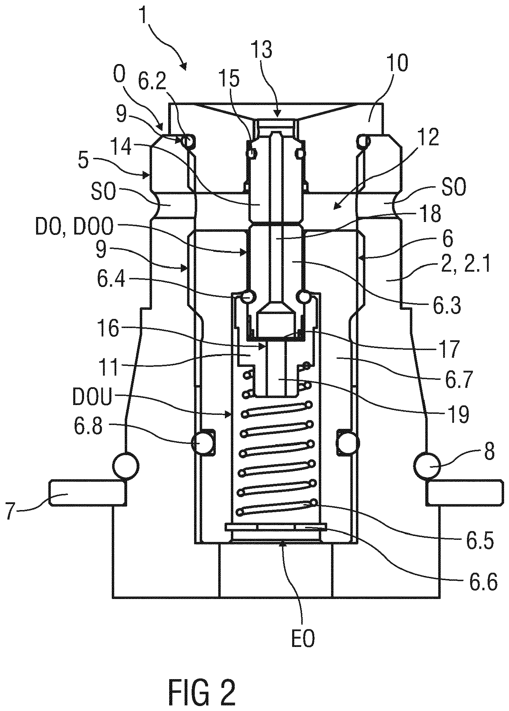

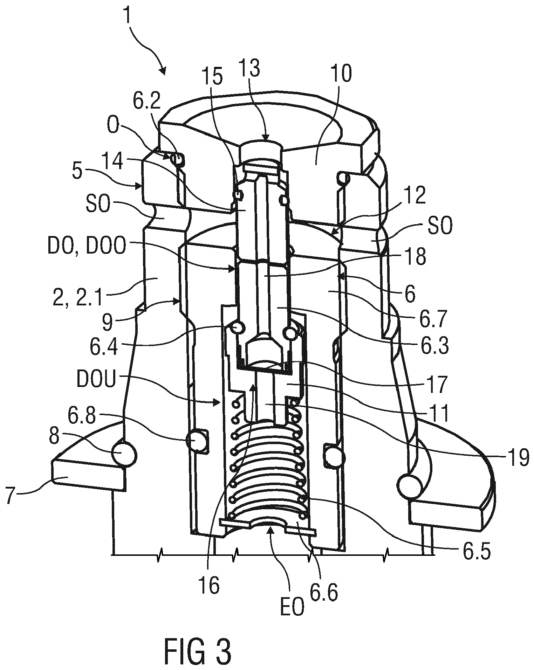

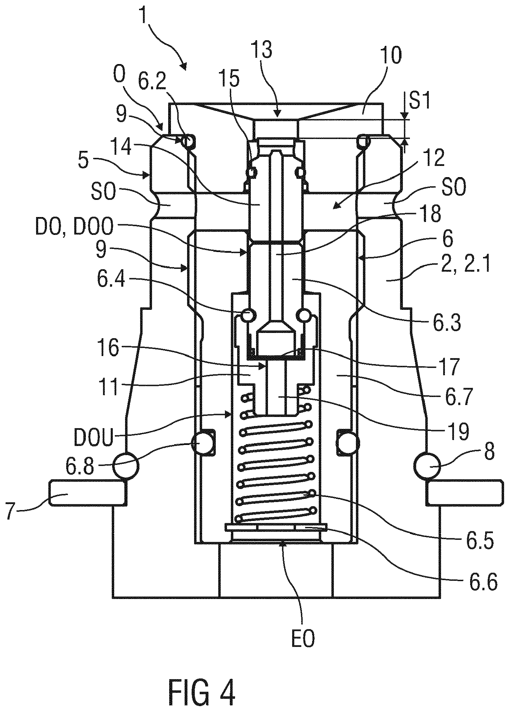

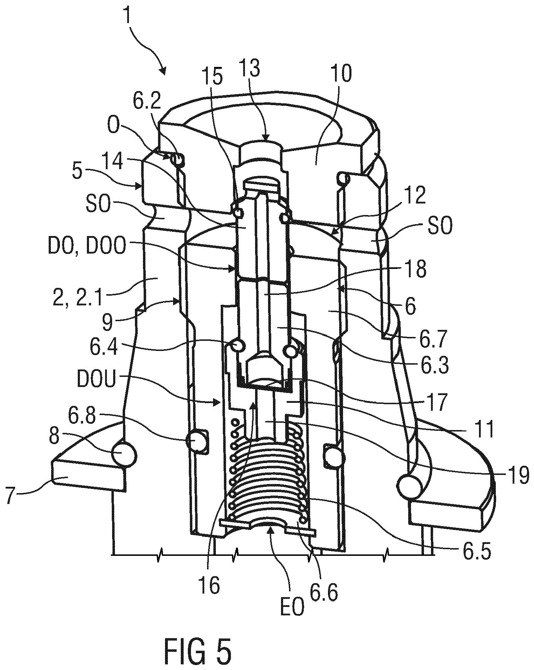

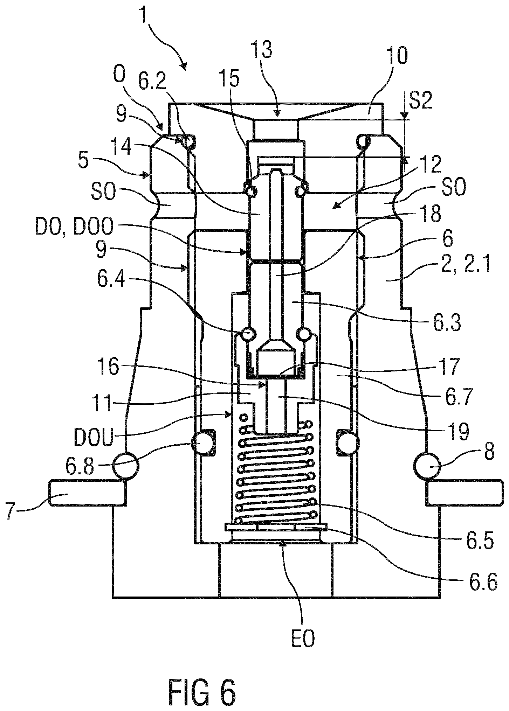

Die Figuren 1 bis 6 zeigen beispielhaft eine Ausführungsform eines Druckbehälters 1, umfassend ein Ventil 6. Dabei zeigen die Figuren 1 und 2 den Druckbehälter 1 in einer geschlossenen Ventilstellung des Ventils 6, die Figuren 3 und 4 zeigen den Druckbehälter 1 in einer Ausströmstellung des Ventils 6 und die Figuren 5 und 6 zeigen den Druckbehälter 1 in einer Befüllstellung des Ventils 6. Der Druckbehälter 1 ist in den Figuren 2, 4 und 6 jeweils in einer Längsschnittdarstellung und in den Figuren 1, 3 und 5 jeweils in einer perspektivischen Längsschnittdarstellung gezeigt.

Der Druckbehälter 1 ist beispielsweise ein Druckgasbehälter und zur Aufnahme eines Gases unter hohem Druck ausgebildet. Beispielsweise ist der Druckbehälter 1 eine so genannte Gaskartusche. Der Druckbehälter 1 umfasst einen Behälterkörper 1.1 mit einem Behälterboden 1.2. Der Behälterkörper 1.1 weist ein unteres Ende 1.3 und ein oberes Ende 1.4 auf.

Der Druckbehälter 1 weist den Behälterkörper 1.1 mit dem an dem unteren Ende 1.3 angeordneten und insbesondere einstückig mit dem Behälterkörper 1.1 ausgebildeten Behälterboden 1.2 auf.

An dem oberen und somit dem Behälterboden 1.2 gegenüberliegenden Ende 1.4 weist der Behälterkörper 1.1 einen Endbereich 2 auf, welcher insbesondere einstückig mit dem Behälterkörper 1.1 ausgebildet ist. Der Endbereich 2 weist eine Öffnung O auf.

Der Behälterboden 1.2, der Behälterkörper 1.1 und der Endbereich 2 sind insbesondere als homogenes, einstückiges Bauteil ohne Fügestellen ausgebildet und gemeinsam in einem Umformverfahren, beispielsweise einem Rollumformverfahren, aus einem Materialrohling, beispielsweise aus einem Aluminiumrohling oder einem anderen Material, hergestellt.

Zu einer mediendichten Kopplung des Druckbehälters 1 mit einer Anwendung und/oder einer Befüllvorrichtung weist dieser beispielsweise eine an einer die Öffnung O des Endbereichs 2 umgebenden Wandung 2.1 außenseitig eingebrachte Anschlussgeometrie 5 auf, welche zum Beispiel als ein Außengewinde, beispielsweise als ein so genanntes ACME-Gewinde, ausgebildet ist. Dabei bildet die Wandung 2.1, insbesondere aufweisend die Anschlussgeometrie 5, einen Anschluss, welcher eingerichtet ist, mit einem korrespondierenden weiteren Anschluss der entsprechenden Anwendung oder der Befüllvorrichtung mediendicht gekoppelt zu werden oder zu sein. Die Anschlussgeometrie 5 wird beispielsweise während der Formung des Endbereichs 2 in dem Umformverfahren mit erzeugt und/oder mittels spanender Bearbeitung nach der Umformung und/oder durch Aufbringen von Material und/oder anderer geeigneter Verfahren erzeugt.

Der Druckbehälter 1 weist des Weiteren vorteilhafterweise das, insbesondere als Rückschlagventil ausgebildete, Ventil 6 auf. Dieses Ventil 6 ist, zumindest im Wesentlichen, innerhalb des Endbereichs 2 angeordnet. Hierzu weist der Druckbehälter 1 eine an der die Öffnung O des Endbereichs 2 umgebenden Wandung 2.1 innenseitig ausgeformte Befestigungsstruktur 9 für das Ventil 6 auf. Die Befestigungsstruktur 9 weist insbesondere ein an der Innenseite der Wandung 2.1 angeordnetes Innengewinde auf. Das Ventil 6, im dargestellten Beispiel ein Ventilkörper 6.7 des Ventils 6 und ein im dargestellten Beispiel dazu separat ausgebildeter Deckel 10, weist ein zu dem Innengewinde der Befestigungsstruktur 9 korrespondierendes Außengewinde auf.

Das Ventil 6 umfasst im dargestellten Beispiel den Ventilkörper 6.7 und den Deckel 10, welcher mit einem oberen kragenförmigen Deckelabschnitt an der Öffnung O des Endbereichs 2 angeordnet ist. Ausgehend von der Öffnung O und von diesem kragenförmigen Deckelabschnitt ragt der Deckel 10 in den Endbereich 2 hinein. Der Ventilkörper 6.7 ist unterhalb des Deckels 10 und im dargestellten Beispiel von diesem beabstandet im Endbereich 2 angeordnet.

Der Ventilkörper 6.7 und der Deckel 10 liegen jeweils an dem Endbereich 2 mediendicht an. Hierzu ist ein Durchmesser des oberen kragenförmigen Deckelabschnitts größer als ein Öffnungsdurchmesser der Öffnung O des Endbereichs 2, wodurch am oberen kragenförmigen Deckelabschnitt eine dem Endbereich 2 zugewandte Anlagefläche ausgebildet ist, die an einer Stirnseite des Endbereichs 2 anliegt. Zudem ist zwischen dem Deckel 10 und dem Endbereich 2 eine, insbesondere als O-Ring oder Wellendichtung ausgebildete, Dichtung 6.2 angeordnet. Diese liegt insbesondere in einem Übergangsbereich zwischen dem oberen kragenförmigen Deckelabschnitt und dem sich darunter anschließenden und in den Endbereich 2 hineinragenden Abschnitt des Deckels 10 am Deckel 10 an und in einem Öffnungsrandbereich innenseitig an der die Öffnung O des Endbereichs 2 umgebenden Wandung 2.1 des Endbereichs 2 an. In den dargestellten Beispielen ist sie in einer Aufnahmenut des Deckels 10 angeordnet. Des Weiteren ist auch zwischen dem Ventilkörper 6.7 und dem Endbereich 2 eine, insbesondere als O-Ring oder Wellendichtung ausgebildete, Dichtung 6.8 angeordnet. Im dargestellten Beispiel ist sie in einer Aufnahmenut im Ventilkörper 6.7 angeordnet und liegt somit am Ventilkörper 6.7 und des Weiteren am Endbereich 2 dichtend an.

Der Ventilkörper 6.7 und/oder der Deckel 10 sind beispielsweise jeweils aus Aluminium oder Messing oder einem anderen Material gebildet.

Der Ventilkörper 6.7 weist eine in Axialrichtung des Ventilkörpers 6.7 verlaufende und diesen durchdringende Durchlassöffnung DO auf. Diese Durchlassöffnung DO weist einen oberen Abschnitt DOO und einen sich daran anschließenden unteren Abschnitt DOU auf, wobei der obere Abschnitt DOO einen geringeren Durchmesser aufweist als der untere Abschnitt DOU. Das Ventil 6 weist zudem einen Ventilstößel 6.3 auf. Der Ventilstößel 6.3, welcher in den Figuren 1 und 2 in der geschlossenen Ventilstellung dargestellt ist, ist im oberen Abschnitt DOO der Durchlassöffnung DO angeordnet und verschließt sie mediendicht.

In der in den Figuren 3 und 4 dargestellten Ausströmstellung des Ventils 6 sowie in der in den Figuren 5 und 6 dargestellten Befüllstellung des Ventils 6 gibt der Ventilstößel 6.3 den oberen Abschnitt DOO der Durchlassöffnung DO frei. Um diese Ventilfunktion, d. h. das mediendichte Verschließen in der geschlossenen Ventilstellung und das Freigeben in der Ausströmstellung und in der Befüllstellung, zu ermöglichen, ist zwischen dem Ventilstößel 6.3 und dem Ventilkörper 6.7 eine, insbesondere als O-Ring oder Wellendichtung ausgebildete, Dichtung 6.4 angeordnet.

Im dargestellten Beispiel ist an einem unteren Ende des Ventilstößels 6.3 ein im unteren Abschnitt DOU der Durchlassöffnung DO positioniertes Gehäuse 11 angeordnet, wobei ein Durchmesser des Gehäuses 11, zumindest in einem oberen Bereich, der den Ventilstößel 6.3 umfangsseitig außen umschließt, größer als ein Durchmesser des Ventilstößels 6.3 und auch größer als ein Durchmesser des oberen Abschnitts DOO der Durchlassöffnung DO. Dadurch liegt das Gehäuse 11 des Ventilstößels 6.3 in der geschlossenen Ventilstellung mit seiner den Ventilstößel 6.3 radial überragenden Oberseite an einer Oberseite des den oberen Abschnitt DOO der Durchlassöffnung DO radial überragenden unteren Abschnitts DOU der Durchlassöffnung DO an, wobei die Dichtung 6.4 dazwischen angeordnet ist. Im dargestellten Beispiel ist sie in einer im Ventilstößel 6.3 und in seinem Gehäuse 11 ausgebildeten Aufnahmenut angeordnet. Der Ventilstößel 6.3 ist beispielsweise aus Aluminium oder Messing oder einem anderen Material gebildet.

Der Deckel 10 weist eine Befüllöffnung 13 auf, in der ein Betätigungsstößel 14 angeordnet ist, wobei eine Unterseite des Betätigungsstößels 14 an einer Oberseite des Ventilstößels 6.3 anliegt und/oder mit dieser verbunden ist. Der Betätigungsstößel 14 verschließt in der Ausströmstellung des Ventils 6 die Befüllöffnung 13 mediendicht, im dargestellten Beispiel ebenfalls in der geschlossenen Ventilstellung, und gibt in der Befüllstellung des Ventils 6 die Befüllöffnung 13 frei. Dadurch werden das Betätigen des Ventilstößels 6.3 und das mediendichte Verschließen der Öffnung O des Endbereichs 2 in der Ausströmstellung des Ventils 6 ermöglicht. Der Ventilstößel 6.3 ist somit mittels des Betätigungsstößels 14 betätigbar, insbesondere aus der in den Figuren 1 und 2 gezeigten geschlossenen Ventilstellung in die in den Figuren 3 und 4 gezeigte Ausströmstellung bewegbar, insbesondere nach unten bewegbar, und weiter, insbesondere weiter nach unten, in die in den Figuren 5 und 6 gezeigte Befüllstellung bewegbar, insbesondere durch ein entsprechendes Herunterdrücken des Betätigungsstößels 14 und dadurch auch des Ventilstößels 6.3.

Zum mediendichten Verschließen der Befüllöffnung 13 mittels des Betätigungsstößels 14 ist eine Dichtung 15 zwischen dem Betätigungsstößel 14 und dem Deckel 10 vorgesehen. Diese Dichtung 15 ist im dargestellten Beispiel in einer Aufnahmenut des Betätigungsstößels 14 angeordnet und bewegt sich somit zusammen mit dem Betätigungsstößel 14. In der geschlossenen Ventilstellung und in der Ausströmstellung befindet sich diese Dichtung 15 in einem oberen schmalen Bereich der Befüllöffnung 13, liegt dadurch am Betätigungsstößel 14 und an einer Öffnungswand der Befüllöffnung 13 dichtend an und dichtet somit die Befüllöffnung 13 mediendicht ab, wie in den Figuren 1 bis 4 gezeigt. In der Befüllstellung ist der Betätigungsstößel 14 derart weit nach unten bewegt, dass sich die mitbewegte Dichtung 15 in einem unteren breiteren Bereich der Befüllöffnung 13 befindet, welcher einen größeren Durchmesser als der obere Bereich der Befüllöffnung 13 aufweist. Dadurch liegt die Dichtung 15 nicht mehr dichtend an der Öffnungswand der Befüllöffnung 13 an, wodurch die Befüllöffnung 13 in der Befüllstellung freigegeben ist.

Im Endbereich 2 des Behälterkörpers sind, sich einander gegenüberliegend, zwei Ausströmöffnungen SO ausgebildet, welche sich jeweils von einer Außenseite zu einer Innenseite der Wandung 2.1 erstrecken. Sie sind unterhalb der Öffnung O angeordnet. Im dargestellten Beispiel ist der Ventilkörper 6.3 vom Deckel 10 beabstandet angeordnet. Der Deckel 10 ist oberhalb des Ventilkörpers 6.7 und im dargestellten Beispiel auch oberhalb der Ausströmöffnungen SO im Endbereich 2 angeordnet. Dabei sind Ventilkörper 6.7 und Deckel 10 derart angeordnet, dass zwischen Ventilkörper 6.3 und Deckel 10 ein Freiraum 12 ausgebildet ist, in welchen das Medium aus dem Behälterinnenraum des Behälterkörpers 1.1 einströmen kann, wenn sich das Ventil 6 in der Ausströmstellung befindet. Die Ausströmöffnungen SO und der Freiraum 12 sind im dargestellten Beispiel auf gleicher Höhe angeordnet. Dies bezieht sich auf das im Endbereich 2 in einer vorgegebenen Endposition angeordnete Ventil 6, d. h. auf das ordnungsgemäß mit dem Behälterkörper verbundene Ventil 6, umfassend den Ventilkörper 6.7 und den Deckel 10. In anderen Ausführungsformen können die Höhenpositionen der Ausströmöffnungen SO und des Freiraums 12 voneinander abweichen. Dann ist jedoch eine fluidische Verbindung zwischen dem Freiraum 12 und den Ausströmöffnungen SO vorgesehen.

Zur Betätigung in einer Anwendung wird der Betätigungsstößel 14 und dadurch der Ventilstößel 6.3 mittels der Anwendung, beispielsweise mittels einer Betätigungseinheit der Anwendung, nur soweit bewegt, insbesondere nach unten bewegt, bis die in den Figuren 3 und 4 gezeigte Ausströmstellung erreicht ist. Der Betätigungsstößel 14 und somit der Ventilstößel 6.3 wird somit um einen ersten Betätigungsweg S1 aus der in den Figuren 1 und 2 gezeigten geschlossenen Ventilstellung in die in den Figuren 3 und 4 gezeigte Ausströmstellung bewegt, insbesondere nach unten bewegt, d. h. in Richtung des Behälterbodens 1.2 bewegt. In dieser Ausströmstellung des Ventils 6 sind die Ausströmöffnungen SO über das Ventil 6 mit dem Behälterinnenraum des Behälterkörpers 1.1 fluidisch verbunden und die Öffnung O des Endbereichs 2 ist mediendicht verschlossen insbesondere durch den Deckel 10 und den Betätigungsstößel 14. Dadurch strömt das Medium, insbesondere ein Gas, aus dem Behälterinnenraum über die Durchlassöffnung DO in den Freiraum 12 und über die beiden Ausströmöffnungen SO aus dem Druckbehälter 1 aus und in die mit dem Druckbehälter 1 verbundene Anwendung ein. Ein Ausströmen des Mediums über die Öffnung O im Endbereich 2, insbesondere über die Befüllöffnung 13, wird durch den Deckel 10 und den Betätigungsstößel 14, der in der Ausströmstellung die Befüllöffnung 13 im Deckel 10 mediendicht verschließt, verhindert.

Zur Befüllung des Druckbehälters 1 wird bei in der Befüllvorrichtung angeordnetem Druckbehälter 1 der Betätigungsstößel 14 und dadurch der Ventilstößel 6.3, insbesondere mittels einer entsprechenden Einheit der Befüllvorrichtung, über die Ausströmstellung hinweg weiter, insbesondere weiter nach unten, in die in den Figuren 5 und 6 gezeigte Befüllstellung bewegt. Der Betätigungsstößel 14 und somit der Ventilstößel 6.3 wird somit um einen zweiten Betätigungsweg S2, der größer ist als der erste Betätigungsweg S1, aus der in den Figuren 1 und 2 gezeigten geschlossenen Ventilstellung in die in den Figuren 5 und 6 gezeigte Befüllstellung bewegt, insbesondere nach unten bewegt, d. h. in Richtung des Behälterbodens 1.2 bewegt, wodurch nun die Durchlassöffnung DO und auch die Befüllöffnung 13 freigegeben sind. In der Befüllstellung des Ventils 6 ist somit die Öffnung O des Endbereichs 2 über das Ventil 6, insbesondere über die Durchlassöffnung DO und die Befüllöffnung 13 und im dargestellten Beispiel über den Freiraum 12 dazwischen, mit dem Behälterinnenraum des Behälterkörpers 1.1 fluidisch verbunden.

Insbesondere werden zum Befüllen die Ausströmöffungen SO von außen mediendicht verschlossen. Das Befüllen erfolgt dadurch über die Befüllöffnung 13 und die Durchlassöffnung DO. Das Medium, mit welchem der Druckbehälter 1 durch die Befüllvorrichtung befüllt wird, strömt somit von der Befüllvorrichtung über die Befüllöffnung 13 zunächst in den Freiraum 12 und von hier, da die Ausströmöffungen SO von außen mediendicht verschlossen sind, über die Durchlassöffnung DO in den Behälterinnenraum ein.

In einem Verfahren zum Befüllen des Druckbehälters 1 wird somit der Druckbehälter 1 in einer Befüllvorrichtung angeordnet. Dabei kann vorgesehen sein, dass die Ausströmöffnungen SO von außen mediendicht verschlossen werden. Danach wird das Ventil 6 in die Befüllstellung bewegt, d. h. insbesondere werden der Betätigungsstößel 14 und dadurch der Ventilstößel 6.3 in die Befüllstellung bewegt, insbesondere mittels einer entsprechenden Einheit der Befüllvorrichtung. Dies erfolgt aus der geschlossenen Ventilstellung durch eine entsprechend große Bewegung über den zweiten Bewegungsweg S2, insbesondere nach unten. Der Druckbehälter 1 wird dann über die Öffnung O des Endbereichs 2, genauer gesagt im dargestellten Beispiel über die Befüllöffnung 13 und die Durchlassöffnung DO und im dargestellten Beispiel über den dazwischen befindlichen Freiraum 12, befüllt. Dabei wird durch das mediendichte Verschließen der Ausströmöffnungen SO ein Entweichen des Mediums, mit welchem der Druckbehälter 1 befüllt wird, über die Ausströmöffnungen SO verhindert.

Alternativ kann beispielsweise vorgesehen sein, dass der Druckbehälter 1 auf die oben beschriebene Weise über die Öffnung O des Endbereichs 2, genauer gesagt über die Befüllöffnung 13 und die Durchlassöffnung DO und im dargestellten Beispiel über den dazwischen befindlichen Freiraum 12, und zusätzlich über die Ausströmöffnungen SO befüllt wird. Hierbei werden somit die Ausströmöffnungen SO nicht mediendicht verschlossen, sondern ebenfalls mit der Befüllvorrichtung zum Befüllen gekoppelt. Das Medium, mit welchem der Druckbehälter 1 durch die Befüllvorrichtung befüllt wird, strömt somit von der Befüllvorrichtung über die Befüllöffnung 13, im dargestellten Beispiel über den Freiraum 12, und über die Durchlassöffnung DO in den Behälterinnenraum ein und zudem über die Ausströmöffnungen SO, im dargestellten Beispiel zudem über den Freiraum 12, und über die Durchlassöffnung DO in den Behälterinnenraum ein.

Alternativ kann beispielsweise vorgesehen sein, dass der Druckbehälter 1 nur über die Ausströmöffnungen SO befüllt wird. Hierbei wird somit der Druckbehälter 1 in der Befüllvorrichtung angeordnet und die Ausströmöffnungen SO werden nicht mediendicht verschlossen, sondern mit der Befüllvorrichtung zum Befüllen gekoppelt. Des Weiteren wird hierfür das Ventil 6 nicht in die Befüllstellung, sondern nur in die Ausströmstellung bewegt, d. h. insbesondere werden der Betätigungsstößel 14 und dadurch der Ventilstößel 6.3 in die Ausströmstellung bewegt, d. h. aus der geschlossenen Ventilstellung weniger, insbesondere nur um den ersten Bewegungsweg S1, nach unten bewegt, so dass die Befüllstellung nicht erreicht wird. Diese Bewegung erfolgt wieder insbesondere mittels einer entsprechenden Einheit der Befüllvorrichtung. Der Druckbehälter 1 wird nun über die Ausströmöffungen SO befüllt, genauer gesagt im dargestellten Beispiel über die Ausströmöffungen SO und die Durchlassöffnung DO und im dargestellten Beispiel über den dazwischen befindlichen Freiraum 12. In der Ausströmstellung ist die Öffnung O des Endbereichs 2, insbesondere die Befüllöffnung 13, mediendicht verschlossen, insbesondere durch den Betätigungsstößel 14, so dass das Entweichen des Mediums, mit welchem der Druckbehälter 1 befüllt wird, über diese Öffnung O des Endbereichs 2, insbesondere über die Befüllöffnung 13, verhindert wird.

Das Ventil 6 umfasst des Weiteren ein Federelement 6.5, beispielsweise eine Schraubenfeder, welches den Ventilstößel 6.3 in Axialrichtung nach oben, d. h. in Richtung der Öffnung O, und somit gegen den Ventilkörper 6.7 drückt, wobei das Federelement 6.5 im dargestellten Beispiel bei einer Bewegung des Ventilstößels 6.3 von der geschlossenen Ventilstellung in die Ausströmstellung und weiter in die Befüllstellung komprimiert wird. Das Federelement 6.5 liegt hierzu mit einem Federende im dargestellten Beispiel am Gehäuse 11 des Ventilstößels 6.3 an.

Zur Abstützung des Federelements 6.5 an einem dem Ventilstößel 6.3 abgewandten Federende weist das Ventil 6 ein Abstützelement 6.6 auf, welches mit dem Ventilkörper 6.7 verbunden ist. Im dargestellten Beispiel ist es als eine Scheibe ausgebildet, die in den Ventilkörper 6.7 eingesetzt ist.

Das Federelement 6.5 ist somit innerhalb des Ventilkörpers 6.7, genauer gesagt im unteren Abschnitt DOU der Durchlassöffnung DO, angeordnet und stützt sich mit seinem ersten Federende an dem Abstützelement 6.6 und mit seinem gegenüberliegenden zweiten Ende am Ventilstößel 6.3 ab. Dabei stützt es sich im dargestellten Beispiel nur mittelbar, nämlich über das Gehäuse 11 des Ventilstößels 6.3, am Ventilstößel 6.3 ab.

Um das Durchströmen des Mediums durch das Ventil 6 aus dem Behälterinnenraum heraus und in den Behälterinnenraum hinein zu ermöglichen, weisen das Abstützelement 6.6 und der Ventilkörper 6.7 eine Einströmöffnung EO auf. Im dargestellten Beispiel ist das als Scheibe ausgebildete Abstützelement 6.6 im Bereich der Einströmöffnung EO des Ventilkörpers 6.7 angeordnet und weist eine zentrale Aussparung als Einströmöffnung EO auf.

Außenseitig am Endbereich 2 ist unterhalb der Anschlussgeometrie 5 eine Anschlagscheibe 7 angeordnet oder einstückig mit dem Behälterkörper 1.1 ausgebildet. Diese Anschlagscheibe 7 bildet beispielsweise einen Endanschlag für die Kopplung des Druckbehälters 1 mit der Anwendung und/oder mit der Befüllvorrichtung, beispielweise durch Einschrauben des Druckbehälters 1 in die Anwendung oder in die Befüllvorrichtung. Um ein Ausströmen am Endbereich 2 außenseitig vorbei zu verhindern, ist eine, insbesondere als O-Ring oder Wellendichtung ausgebildete, Dichtung 8 oberhalb der Anschlagscheibe 7 vorgesehen. Im dargestellten Beispiel ist sie in einer Aufnahmenut im Endbereich 2 oberhalb der Anschlagscheibe 7 angeordnet und liegt somit am Endbereich 2 dichtend an. Im mit der Anwendung oder mit der Befüllvorrichtung gekoppelten Zustand des Druckbehälters 1 liegt sie zudem an einem entsprechenden Anlagebereich der Anwendung bzw. der Befüllvorrichtung dichtend an.

Im dargestellten Beispiel weist Druckbehälter 1 zudem eine Überdrucksicherung 16 auf. Diese Überdrucksicherung 16 ist im dargestellten Beispiel im Ventil 6 angeordnet. Sie umfasst eine Berstscheibe 17. Um zum Abbauen von Überdruck Medium aus dem Behälterinnenraum abzuleiten, ist ein durch den Ventilstößel 6.3 und den Betätigungsstößel 14 hindurch verlaufender Überdruckkanal 18 ausgebildet, welcher von der Berstscheibe 17 mediendicht verschlossen ist. Die Berstscheibe 17 hierzu an einem zum Behälterinnenraum weisenden Ende des Überdruckkanals 18 am Ventilstößel 6.3 angeordnet und vom Gehäuse 11 am Ventilstößel 6.3 gehalten. An einer vom Überdruckkanal 18 abgewandten Seite der Berstscheibe 17 weist das Gehäuse 11 eine Drucköffnung 19 auf, so dass die Berstscheibe 17 mit einem im Behälterinnenraum herrschenden Druck beaufschlagt wird. Entsprechend einer Auslegung und entsprechenden Ausbildung der Berstscheibe 17 bricht sie, wenn der Druck im Behälterinnenraum einen vorgegebenen Wert überschreitet, d. h. bei zu großem Überdruck, und gibt somit den Überdruckkanal 18 frei. Das Medium im Behälterinnenraum strömt dann über den Überdruckkanal 18 aus dem Druckbehälter 1 aus, wodurch der Überdruck abgebaut wird und somit die Gefahr einer Explosion des Druckbehälters 1 vermieden wird.

Ein Ausgangsbereich des Überdruckkanals 18 im Betätigungsstößel 14 ist im dargestellten Beispiel T-förmig ausgebildet, d. h. der Überdruckkanal 18 mündet nicht an der Oberseite des Betätigungsstößel 14, sondern im oberen Bereich des Betätigungsstößels 14 radial in seiner Umfangswand. Dadurch wird ein Verschließen des Betätigungsstößels 14 beispielsweise durch die Anwendung, insbesondere durch eine auf den Betätigungsstößel 14 einwirkende Betätigungseinheit der Anwendung, vermieden. Um das Ausströmen des Mediums über den Überdruckkanal 18 sicherzustellen, ist der obere Bereich des Betätigungsstößels 14 von der Öffnungswand der Befüllöffnung 13 beabstandet, so dass das Medium nach dem Bersten der Berstscheibe 17 aus dem Überdruckkanal 18 entweichen und zwischen Betätigungsstößel 14 und Öffnungswand der Befüllöffnung 13 hindurch ausströmen kann.

Die Befüllöffnung 13 und der Betätigungsstößel 14 weisen in diesem oberen Bereich jeweils eine Durchmesserverkleinerung auf, wodurch der Betätigungsstößel 14 im Ventil 6 gehalten ist, d. h. nicht nach oben aus dem Deckel 10 entweichen kann.

### BEZUGSZEICHENLISTE

- 1: Druckbehälter
- 1.1: Behälterkörper
- 1.2: Behälterboden
- 1.3: unteres Ende
- 1.4: oberes Ende
- 2: Endbereich
- 2.1: Wandung
- 5: Anschlussgeometrie
- 6: Ventil
- 6.2: Dichtung
- 6.3: Ventilstößel
- 6.4: Dichtung
- 6.5: Federelement
- 6.6: Abstützelement
- 6.7: Ventilkörper
- 6.8: Dichtung
- 7: Anschlagscheibe
- 8: Dichtung
- 9: Befestigungsstruktur
- 10: Deckel
- 11: Gehäuse
- 12: Freiraum
- 13: Befüllöffnung
- 14: Betätigungsstößel
- 15: Dichtung
- 16: Überdrucksicherung
- 17: Berstscheibe
- 18: Überdruckkanal
- 19: Drucköffnung

- DO: Durchlassöffnung
- DOO: oberer Abschnitt
- DOU: unterer Abschnitt
- EO: Einströmöffnung
- O: Öffnung
- SO: Ausströmöffnung
- S1: erster Betätigungsweg
- S2: zweiter Betätigungsweg

## Patentansprüche

1. Druckbehälter (1), aufweisend
- einen Behälterkörper (1.1), wobei an einem oberen Ende (1.4) des Behälterkörpers (1.1) ein Endbereich (2) einstückig mit dem Behälterkörper (1.1) ausgebildet ist, welcher eine Öffnung (O) aufweist, und
- ein Ventil (6), welches im Endbereich (2) angeordnet ist,
**dadurch gekennzeichnet, dass**
- in der die Öffnung (O) des Endbereichs (2) umgebenden Wandung (2.1) unter der Öffnung (O) zumindest zwei Ausströmöffnungen (SO) ausgebildet sind, die insbesondere einander gegenüberliegend angeordnet sind,
- in einer Ausströmstellung des Ventils (6) die Ausströmöffnungen (SO) über das Ventil (6) mit einem Behälterinnenraum des Behälterkörpers fluidisch verbunden sind und die Öffnung (O) des Endbereichs (2) mediendicht verschlossen ist, und
- in einer Befüllstellung des Ventils (6) die Öffnung (O) des Endbereichs (2) über das Ventil (6) mit dem Behälterinnenraum des Behälterkörpers (1.1) fluidisch verbunden ist.

2. Druckbehälter (1) nach Anspruch 1,
**dadurch gekennzeichnet, dass** das Ventil (6) einen Ventilkörper (6.7) mit einer Durchlassöffnung (DO) aufweist, in der ein Ventilstößel (6.3) angeordnet ist, welcher in einer geschlossenen Ventilstellung des Ventils (6) die Durchlassöffnung (DO) mediendicht verschließt und in der Ausströmstellung sowie in der Befüllstellung des Ventils (6) die Durchlassöffnung (DO) freigibt.

3. Druckbehälter (1) nach Anspruch 2,
wobei das Ventil (6) ein mit dem Ventilkörper (6.7) verbundenes oder an dem Ventilkörper (6.7) ausgebildetes Abstützelement (6.6) und ein innerhalb des Ventilkörpers (6.7) angeordnetes Federelement (6.5) aufweist, welches sich mit einem ersten Ende an dem Abstützelement (6.6) und mit einem gegenüberliegenden zweiten Ende mittelbar oder unmittelbar an dem Ventilstößel (6.3) abstützt, wobei das Federelement (6.5) bei einer Bewegung des Ventilstößels (6.3) von der geschlossenen Ventilstellung in die Ausströmstellung gespannt wird und bei einer Bewegung des Ventilstößels (6.3) von der Ausströmstellung in die Befüllstellung weiter gespannt wird.

4. Druckbehälter (1) nach Anspruch 2 oder 3,
**dadurch gekennzeichnet, dass** ein Deckel (10) vorgesehen ist, welcher oberhalb des Ventilkörpers (6.7) und oberhalb der Ausströmöffnungen (SO) im Endbereich (2) angeordnet ist, wobei insbesondere der Deckel (10) eine Befüllöffnung (13) aufweist, in der ein Betätigungsstößel (14) angeordnet ist, wobei insbesondere eine Unterseite des Betätigungsstößels (14) an einer Oberseite des Ventilstößels (6.3) anliegt und/oder mit dieser verbunden ist, und wobei insbesondere der Betätigungsstößel (14) in der Ausströmstellung des Ventils (6) die Befüllöffnung (13) mediendicht verschließt und in der Befüllstellung des Ventils (6) die Befüllöffnung (13) freigibt.

5. Druckbehälter (1) nach einem der vorhergehenden Ansprüche,
**dadurch gekennzeichnet, dass** eine an einer die Öffnung (O) des Endbereichs (2) umgebenden Wandung (2.1) innenseitig ausgeformte Befestigungsstruktur (9) für das Ventil (6) vorgesehen ist.

6. Druckbehälter (1) nach Anspruch 5,
**dadurch gekennzeichnet, dass** die Befestigungsstruktur (9) ein an der Innenseite der Wandung (2.1) angeordnetes Innengewinde aufweist.

7. Druckbehälter (1) nach Anspruch 6,
**dadurch gekennzeichnet, dass** das Ventil (6) ein zu dem Innengewinde der Befestigungsstruktur (9) korrespondierendes Außengewinde aufweist, wobei das Ventil (6) im in das Innengewinde eingeschraubten Zustand im Bereich der Öffnung (O) des Endbereichs (2) angeordnet ist, ausgehend von der Öffnung (O) in den Endbereich (2) hineinragt und an dem Endbereich (2) mediendicht anliegt.

8. Druckbehälter (1) nach einem der Ansprüche 3 bis 7,
**dadurch gekennzeichnet, dass** das Abstützelement (6.6) und/oder der Ventilkörper (6.7) eine Einströmöffnung (EO) aufweist.

9. Druckbehälter (1) nach einem der vorhergehenden Ansprüche,
**dadurch gekennzeichnet, dass** der Behälterkörper (1.1) einen an einem unteren Ende angeordneten und einstückig mit dem Behälterkörper (1.1) ausgebildeten Behälterboden (1.2) aufweist.

10. Druckbehälter (1) nach einem der vorhergehenden Ansprüche,
**dadurch gekennzeichnet, dass** der Behälterkörper (1.1) eine an der die Öffnung (O) des Endbereichs (2) umgebenden Wandung (2.1) außenseitig angeordnete Anschlussgeometrie (5) aufweist, wobei die Wandung (2.1) mit der Anschlussgeometrie (5) einen Anschluss bildet, welcher eingerichtet ist, mit einem korrespondierenden weiteren Anschluss mediendicht gekoppelt zu werden oder zu sein.

11. Druckbehälter (1) nach einem der vorhergehenden Ansprüche,
**gekennzeichnet durch** eine Überdrucksicherung (16).

12. Druckbehälter (1) nach Anspruch 11,
**dadurch gekennzeichnet, dass** die Überdrucksicherung (16) im Ventil (6) oder im Behälterboden (1.2) angeordnet ist.

13. Druckbehälter (1) nach Anspruch 11 oder 12,
**dadurch gekennzeichnet, dass** die Überdrucksicherung (16) eine Berstscheibe (17) aufweist.

14. Druckbehälter (1) nach Anspruch 13,
**dadurch gekennzeichnet, dass** ein durch den Ventilstößel (6.3) und den Betätigungsstößel (14) hindurch verlaufender Überdruckkanal (18) ausgebildet ist, welcher von der Berstscheibe (17) mediendicht verschlossen ist.

15. Verfahren zum Befüllen eines Druckbehälters (1) nach einem der vorhergehenden Ansprüche, wobei der Druckbehälter (1) in einer Befüllvorrichtung angeordnet wird, wobei die Ausströmöffnungen (SO) von außen mediendicht verschlossen werden, wobei danach das Ventil (6) in die Befüllstellung bewegt wird und der Druckbehälter (1) über die Öffnung (O) befüllt wird.

## Claims

1. Pressure container (1) having
- a container body (1.1), wherein an end region (2) having an opening (O) is formed in one piece with the container body (1.1) at an upper end (1.4) of the container body (1.1), and
- a valve (6), which is arranged in the end region (2),
**characterized in that**
- at least two outflow openings (SO), which are arranged in particular situated opposite one another, are formed in the wall (2.1) that surrounds the opening (O) of the end region (2) below the opening (O),
- in an outflow position of the valve (6), the outflow openings (SO) are connected fluidically to a container interior space of the container body via the valve (6) and the opening (O) of the end region (2) is closed off in a media-tight manner, and
- in a filling position of the valve (6), the opening (O) of the end region (2) is connected fluidically to the container interior space of the container body (1.1) via the valve (6).

2. Pressure container (1) according to Claim 1,
**characterized in that** the valve (6) has a valve body (6.7) with a passage opening (DO), there being arranged in said passage opening a valve plunger (6.3) which closes off the passage opening (DO) in a media-tight manner in a closed valve position of the valve (6) and opens up the passage opening (DO) in the outflow position and in the filling position of the valve (6).

3. Pressure container (1) according to Claim 2,
wherein the valve (6) has a supporting element (6.6), which is connected to the valve body (6.7) or is formed on the valve body (6.7), and a spring element (6.5), which is arranged within the valve body (6.7) and is supported at a first end against the supporting element (6.6) and at an opposite second end indirectly or directly against the valve plunger (6.3), wherein the spring element (6.5) is stressed when the valve plunger (6.3) is moved from the closed valve position into the outflow position and is stressed further when the valve plunger (6.3) is moved from the outflow position into the filling position.

4. Pressure container (1) according to Claim 2 or 3, **characterized in that** provision is made of a cover (10) which is arranged in the end region (2) above the valve body (6.7) and above the outflow openings (SO), wherein in particular the cover (10) has a filling opening (13) in which an actuating plunger (14) is arranged, wherein in particular a bottom side of the actuating plunger (14) bears against and/or is connected to a top side of the valve plunger (6.3), and wherein in particular the actuating plunger (14) closes off the filling opening (13) in a media-tight manner in the outflow position of the valve (6) and opens up the filling opening (13) in the filling position of the valve (6) .

5. Pressure container (1) according to one of the preceding claims,
**characterized in that** provision is made of a fastening structure (9) for the valve (6), which fastening structure is formed on the inside of a wall (2.1) which surrounds the opening (O) of the end region (2).

6. Pressure container (1) according to Claim 5, **characterized in that** the fastening structure (9) has an internal thread which is arranged on the inner side of the wall (2.1).

7. Pressure container (1) according to Claim 6,
**characterized in that** the valve (6) has an external thread which corresponds to the internal thread of the fastening structure (9), wherein the valve (6), in the state screwed into the internal thread, is arranged in the region of the opening (O) of the end region (2), projects from the opening (O) into the end region (2) and bears against the end region (2) in a media-tight manner.

8. Pressure container (1) according to one of Claims 3 to 7,
**characterized in that** the supporting element (6.6) 20 and/or the valve body (6.7) have/has an inflow opening (EC).

9. Pressure container (1) according to one of the preceding claims,
**characterized in that** the container body (1.1) has a container base (1.2) which is arranged on a lower end and which is formed in one piece with the container body (1.1).

10. Pressure container (1) according to one of the preceding claims,
**characterized in that** the container body (1.1) has a connection geometry (5) which is arranged on the outside of the wall (2.1) which surrounds the opening (O) of the end region (2), wherein the wall (2.1) forms with the connection geometry (5) a connection which is configured to be coupled, or in a state coupled, in a media-tight manner to a corresponding further connection.

11. Pressure container (1) according to one of the preceding claims,
**characterized by** a pressure-relief arrangement (16) .

12. Pressure container (1) according to Claim 11,
**characterized in that** the pressure-relief arrangement (16) is arranged in the valve (6) or in the container base (1.2).

13. Pressure container (1) according to Claim 11 or 12, **characterized in that** the pressure-relief arrangement (16) has a rupture disc (17).

14. Pressure container (1) according to Claim 13,
**characterized in that** a pressure-relief channel (18) which runs through the valve plunger (6.3) and the actuating plunger (14) and is closed off in a media-tight manner by the rupture disc (17) is formed.

15. Method for filling a pressure container (1) according to one of the preceding claims, wherein the pressure container (1) is arranged in a filling device, wherein the outflow openings (SO) are closed off in a media-tight manner from the outside, wherein subsequently the valve (6) is moved into the filling position and the pressure container (1) is filled via the opening (O).

## Revendications

1. Récipient sous pression (1), comportant
- un corps de récipient (1.1), une zone d'extrémité (2), qui présente une ouverture (O), étant formée d'une seule pièce avec le corps de récipient (1.1) à une extrémité supérieure (1.4) du corps de récipient (1.1), et
- une soupape (6) qui est disposée dans la zone d'extrémité (2),
**caractérisé en ce que**
- au moins deux ouvertures d'évacuation (SO), qui sont en particulier disposées l'une en face de l'autre, sont formées au-dessous de l'ouverture (O) dans la paroi (2.1), qui entoure l'ouverture (O) de la zone d'extrémité (2),
- dans une position d'évacuation de la soupape (6), les ouvertures d'évacuation (SO) sont reliées fluidiquement à un espace de récipient intérieur du corps de récipient par le biais de la soupape (6) et l'ouverture (O) de la zone d'extrémité (2) est fermée de manière étanche aux milieux, et
- dans une position de remplissage de la soupape (6), l'ouverture (O) de la zone d'extrémité (2) est reliée fluidiquement à l'espace de récipient intérieur (1.1) par le biais de la soupape (6).

2. Récipient sous pression (1) selon la revendication 1, **caractérisé en ce que** la soupape (6) comporte un corps de soupape (6.7) pourvu d'une ouverture de passage (DO) dans laquelle est disposé un poussoir de soupape (6.3) qui ferme l'ouverture de passage (DO) de manière étanche aux milieux lorsque la soupape (6) est dans une position de soupape fermée et qui libère l'ouverture de passage (DO) lorsque la soupape (6) est dans la position d'évacuation et la position de remplissage.

3. Récipient sous pression (1) selon la revendication 2, la soupape (6) comportant un élément de support (6.6) qui est relié au corps de soupape (6.7) ou qui est formé sur le corps de soupape (6.7) et un élément à ressort (6.5) qui est disposé à l'intérieur du corps de soupape (6.7) et qui s'appuie à une première extrémité sur l'élément support (6.6) et à une deuxième extrémité opposée directement ou indirectement sur le poussoir de soupape (6.3), l'élément à ressort (6.5) étant tendu lorsque le poussoir de soupape (6.3) se déplace de la position de soupape fermée à la position d'évacuation et étant davantage tendu lorsque le poussoir de soupape (6.3) se déplace de la position d'évacuation à la position de remplissage.

4. Récipient sous pression (1) selon la revendication 2 ou 3, **caractérisé en ce qu'**un couvercle (10) est prévu qui est disposé au-dessus du corps de soupape (6.7) et au-dessus des ouvertures d'évacuation (SO) dans la zone d'extrémité (2), en particulier le couvercle (10) comportant une ouverture de remplissage (13) dans laquelle est disposé un poussoir d'actionnement (14), en particulier une face inférieure du poussoir d'actionnement (14) venant en appui sur une face supérieure du poussoir de soupape (6.3) et/ou étant reliée à celle-ci, et en particulier, le poussoir d'actionnement (14) fermant l'ouverture de remplissage (13) de manière étanche aux milieux lorsque la soupape (6) est dans la position d'évacuation et libérant l' ouverture de remplissage (13) lorsque la soupape (6) est dans la position de remplissage.

5. Récipient sous pression (1) selon l'une des revendications précédentes, **caractérisé en ce qu'**une structure de fixation (9) formée du côté intérieur sur une paroi (2.1) entourant l'ouverture (O) de la zone d'extrémité (2) est prévue pour la soupape (6).

6. Récipient sous pression (1) selon la revendication 5, **caractérisé en ce que** la structure de fixation (9) comporte un filetage intérieur disposé du côté intérieur de la paroi (2.1).

7. Récipient sous pression (1) selon la revendication 6 **caractérisé en ce que** la soupape (6) comporte un filetage extérieur correspondant au filetage intérieur de la structure de fixation (9), la soupape (6) étant disposée, lorsqu'elle est vissée dans le filetage intérieur, dans la zone de l'ouverture (O) de la zone d'extrémité (2), faisant saillie de l'ouverture (O) jusque dans la zone d'extrémité (2) et venant en appui de manière étanche aux milieux sur la zone d'extrémité (2) .

8. Récipient sous pression (1) selon l'une des revendications 3 à 7, **caractérisé en ce que** l'élément de support (6.6) et/ou le corps de soupape (6.7) comporte une ouverture d'entrée (EO).

9. Récipient sous pression (1) selon l'une des revendications précédentes, **caractérisé en ce que** le corps de récipient (1.1) comporte un fond de récipient (1.2) qui est disposé à une extrémité inférieure et qui est formé d'une seule pièce avec le corps de récipient (1.1) .

10. Récipient sous pression (1) selon l'une des revendications précédentes, **caractérisé en ce que** le corps de récipient (1.1) présente une géométrie de raccordement (5) qui est disposée du côté extérieur sur la paroi (2.1) entourant l'ouverture (O) de la zone d'extrémité (2), la paroi (2.1) formant avec la géométrie de raccordement (5) un raccordement qui est conçu pour être accouplé de manière étanche aux milieux avec un autre raccordement correspondant.

11. Récipient sous pression (1) selon l'une des revendications précédentes, **caractérisé par** une sécurité anti-surpression (16).

12. Récipient sous pression (1) selon la revendication 11, **caractérisé en ce que** la sécurité anti-surpression (16) est disposée dans la soupape (6) ou dans le fond du récipient (1.2).

13. Récipient sous pression (1) selon la revendication 11 ou 12, **caractérisé en ce que** la sécurité anti-surpression (16) comporte un disque de rupture (17).

14. Récipient sous pression (1) selon la revendication 13, **caractérisé en ce qu'**un conduit de surpression (18) est prévu qui s'étend à travers le poussoir de soupape (6.3) et le poussoir d'actionnement (14) et qui est fermé de manière étanche aux milieux par le disque de rupture (17).

15. Procédé de remplissage d'un récipient sous pression (1) selon l'une des revendications précédentes, le récipient sous pression (1) étant disposé dans un dispositif de remplissage, les ouvertures d'évacuation (SO) étant fermées de manière étanche aux milieux depuis l'extérieur, la soupape (6) étant ensuite déplacée jusque dans la position de remplissage et le récipient sous pression (1) étant rempli par l'ouverture (O).
